# EUROPÄISCHE PATENTSCHRIFT

(11) **EP 3 520 887 B1**
(45) Veröffentlichungstag und Bekanntmachung des Hinweises auf die Patenterteilung: **20.05.2020**
(21) Anmeldenummer: 18155132.6
(22) Anmeldetag: 05.02.2018
(51) Int. Cl.: B01F 3/18, B01F 7/08, B01F 15/00, B29B 7/90, B29B 7/42, B29B 7/48

(54) **VORRICHTUNG ZUM AUFEINANDERFOLGENDEN EINBRINGEN VON ADDITIVEN IN EIN POLYMERGRANULAT UND VERWENDUNG DER VORRICHTUNG**
DEVICE FOR SEQUENTIALLY INTRODUCING ADDITIVES IN A POLYMER GRANULATE AND USE OF THE DEVICE
DISPOSITIF D'INTRODUCTION SUCCESSIVE D'ADDITIFS DANS UN GRANULÉ DE POLYMÈRE ET UTILISATION DUDIT DISPOSITIF

(43) Veröffentlichungstag der Anmeldung: 07.08.2019
(73) Patentinhaber: Köllemann GmbH Förder- und Verfahrenstechnik, 53518 Adenau (DE)
(72) Erfinder: FIEDLER, Guido, 56729 Welschenbach (DE); GINSTER, Matthias, 53520 Reiffscheid (DE)
(74) Vertreter: Meyer-Dulheuer MD Legal Patentanwälte PartG mbB

(56) Entgegenhaltungen:
- EP-A1- 1 203 650
- US-A- 3 632 256

## Beschreibung

Die Erfindung richtet sich auf eine Vorrichtung zum aufeinanderfolgenden Einbringen von Additiven in ein Polymergranulat und die Verwendung der Vorrichtung zum Mischen des Polymergranulats mit den Additiven. Die Vorrichtung besteht aus einem Mischer mit einem Gehäuse, welcher mindestens eine Mischerwelle mit daran in Helixanordnung befestigten nichtdurchgängigen Förderformteilen enthält, die durch einen Antrieb zum Transport des Polymergranulats gedreht werden, wobei der Mischer in dem Gehäuse einen Einlass für das zu vermischende Polymergranulat aufweist und mehrere aufeinanderfolgende Einlässe für das Additiv und Auslässe für das mit dem Additiv vermischte Polymergranulat, und auf jeden Einlass für das Additiv ein Auslass für das mit dem Additiv vermischte Polymergranulat folgt, so dass sich in dem Mischer zwei oder mehrere Mischzonen bilden, und wobei zwischen mindestens zwei Mischzonen auf der Oberfläche der Mischwellen statt der nichtdurchgängigen Förderformteile ein Abschnitt mit einer durchgängigen Förderschnecke angeordnet ist, der für rückströmende Feststoffe aus der darauffolgenden Mischzone nicht durchlässig ist. Die Erfindung richtet sich auch auf die Verwendung der Vorrichtung.

Thermoplastische Massen müssen bei der Herstellung von Polymeren oftmals mit Additiven vermischt werden. Beispiele für thermoplastische Massen sind Polymergranulate. Das Vermischen der Additive mit den thermoplastischen Massen geschieht dabei in der Regel in Mischern, welche aus einem Gehäuse mit einer oder mehreren Mischerschnecken bestehen. Die Mischerschnecke wird dabei durch eine drehbare Mischerwelle gebildet, die auf ihrer Oberfläche Förderschnecken aufweist, die in einer Helixanordnung auf der Mischerwelle aufgebracht sind. Durch die Drehung wird das Polymergranulat dann innerhalb des Gehäuses transportiert. Das Gehäuse enthält an einem Ende einen Einlass für das Polymergranulat, wodurch dieses in den Mischer eingefüllt wird, einen Einlass für das Additiv und einen Auslass für das mit dem Polymergranulat vermischte Additiv. Die Mischerwelle mit den Förderschnecken wird dann gedreht, wodurch das Polymergranulat und das Additiv innerhalb des Gehäuses weiterbewegt werden und diese sich dabei vermischen.

Oftmals ist es erforderlich, dass ein Polymergranulat durch das Mischen mit Additiven für unterschiedliche Einsatzwecke bereitgestellt werden soll. Für diese Zwecke kommen verschiedene Additive zum Einsatz, um die Polymergranulate für die unterschiedlichen Einsatzzwecke herzustellen. Dabei kann es auch vorkommen, dass Additive für die Herstellung von Polymergranulaten gewechselt werden müssen. Eine Verunreinigung des hergestellten Polymergranulates, welches mit einem Additiv versehen ist, mit einem anderen Additiv ist dabei jedoch nicht erwünscht. Eine Reinigung des Mischers ist aufwändig und muss sehr sorgfältig durchgeführt werden, so dass die Möglichkeit einer Reinigung des Mischers bei einem Wechsel des Additivs aus wirtschaftlichen Gründen oftmals ausscheidet.

Ein Additiv, welches als Additiv für Polymergranulate sehr oft verwendet wird, ist Ruß. Dieses wird zur Schwarzfärbung von thermoplastischen Massen verwendet. Wird dieses in einem Mischer zum Mischen hinzugesetzt, so lässt sich ein herkömmlicher Mischer ohne weitere Reinigung und ohne weitere Maßnahmen ausschließlich zum Mischen mit Ruß verwenden. Dies ist wirtschaftlich sehr nachteilig, so dass nach Möglichkeiten gesucht wird, Polymergranulate auch mit anderen Additiven zu mischen, ohne dass diese mit Ruß verunreinigt werden.

Aus diesem Grund gibt es im Stand der Technik Mischer, die mehrere Mischzonen aufweisen. Diese Mischzonen werden durch einen Einlass und einen Auslass in dem Gehäuse des Mischers gebildet, so dass eine Mischzone durch den Bereich zwischen dem Einlass des Mischers für ein Additiv und dem Auslass des Mischers für das mit dem Additiv vermischte Polymergranulat definiert wird. Durch die Aufeinanderfolge von Einlässen und Auslässen werden in Transportrichtung des Transportgutes, also des Polymergranulates, dann mehrere Mischzonen definiert. Das Additiv, dessen Verunreinigung nicht erwünscht ist, wird dann in die letzte Mischzone gegeben. Wird also beispielsweise Ruß zugegeben, so wird dieses in Transportrichtung in die letzte Mischzone gegeben. Das unvermischte Polymergranulat wird dabei in der Regel in einen separaten Einlass in Transportrichtung am Anfang des Mischers zugegeben, da dadurch eine verbesserte Vermischung mit dem Additiv erreicht wird.

Das Dokument US3632256A beschreibt einen Extruder oder Mischer zur Vermischung von Kunststoffen mit Additiven, wobei der Extruder oder Mischer mehrere Extruderwellen in einem Extrudergehäuse aufweist, welches eine Vielzahl von Einlässen für Additive und eine Vielzahl von Auslässen für den Auslass des bemischten Kunststoffmaterials enthält, so dass eine Vielzahl von getrennten Mischzonen in Aufeinanderfolge entlang der Länge des Extrudergehäuses gebildet wird, wobei der Mischer schraubenförmige Mittel besitzt, und die schraubenförmigen Mittel zwischen den Mischzonen eine Drehsinnumkehr aufweisen, und wobei die Extruderwellen miteinanderläufig, gegenläufig oder ineinander verzahnt sind.

Das Dokument US4443109A beschreibt eine Vorrichtung und ein Verfahren zur automatischen und kontinuierlichen Zugabe und zum automatischen und kontinuierlichen Mischen und Verschneiden von teilchenförmigem Material, wobei das teilchenförmige Material zunächst ohne Vermischen über ein Zugaberohr in eine Mischkammer durch Schwerkraft gegeben wird, so dass sich eine bestimmte Materialhöhe einstellt, und dann über drehbare schraubenförmige Transportmittel verschiedene Additive hinzugegeben werden, so dass sich innerhalb der Kammer ein Mischgleichgewicht einstellt, und wobei die Additive innerhalb der Mischkammer oberhalb der Materialhöhe zugegeben werden, so dass sich die zugegebenen verschiedenen Additive in der Mischkammer mit dem teilchenförmigen Material vermischen und dadurch die endgültige Zusammensetzung der erhaltenen Mischung bestimmen. Das Zugaberohr in die Mischkammer ist in einer Ausführungsform der Erfindung ebenfalls drehbar.

Das Dokument US3897889A beschreibt eine Vorrichtung zum Dosieren, Verschneiden und Transportieren von teilchenförmigem Material, welches zwei oder mehrere Bestandteile enthält, wie beispielsweise Polymergranulat als Ausgangsmaterial, wobei die Vorrichtung einen ersten Einlass zur Zugabe von mehreren Additiven aufweist, der für die einzelnen Additive verschiedene Dosierungsventile enthält, und eine Förderschnecke in einem Gehäuse, auf die die verschiedenen Additive aufgegeben werden, wobei die Förderschnecke an ihrem Auslassende eine abwärts gerichtete Auslassöffnung aufweist, und wobei in Transportrichtung des teilchenförmigen Materials ein weiterer Einlass angeordnet ist, durch den ein konzentrierter Farbstoff als zusätzliches Additiv auf die Förderschnecke aufgegeben wird, wobei das zusätzliche Additiv über eine vibrierende Rutsche durch Schwerkrafteinwirkung auf die Förderschnecke gegeben wird. Die Vorrichtung ist platzsparend und kann direkt und in einfacher Weise auf Extruder aufgesetzt werden.

Die Mischer aus dem Stand der Technik, die mehrere Mischzonen aufweisen, weisen jedoch das Problem auf, dass es zwischen den Mischzonen trotz aller Vorsichtsmaßnahmen trotzdem zu einer Vermischung des Polymergranulates mit dem Additiv kommt, welches in der darauffolgenden Mischzone zu gegeben wird. So wandert insbesondere aufgrund nichtidealen Feststoffverhaltens ein Additiv, welches über einen Einlass für eine Mischzone zugegeben wird, entgegen der Transportrichtung über die Mischschnecke in die vorhergehende Mischzone. Dies ist unerwünscht, da dadurch die Vorteile eines Mischers mit mehreren Mischzonen, der zum Zwecke der Zugabe unterschiedlicher Additive ohne deren Rückvermischung bereitgestellt wird, geschmälert oder gar zunichte gemacht werden.

Ruß als Additiv beispielsweise hat nicht nur Feststoffeigenschaften, sondern ist auch von öliger Konsistenz. Dadurch wandert dieses nach einiger Zeit der Zugabe die Mischschnecke entgegen der Transportrichtung aufwärts in die vorhergehende Mischzone. In der vorhergehenden Mischzone wird dann das Polymergranulat, welches kein Ruß enthalten soll, bereits durch geringe Spuren Ruß in unerwünschter Weise schwarz gefärbt. Da ein Mischer mit mehreren Mischzonen verwendet wird, um diesen nicht für die ausschließliche Zugabe von Ruß vorhalten zu müssen und auch nicht schwarz gefärbte Polymergranulate verarbeiten zu können, ist die Rückvermischung des unverfärbten Polymergranulates durch Ruß über die Mischschnecke nicht erwünscht.

Das Dokument EP-A-1 203 650 offenbart eine Vorrichtung gemäß dem Oberbegriff des Anspruchs 1.

Es besteht deshalb die Aufgabe, einen Mischer zur Verfügung zu stellen, welcher die Zugabe von verschiedenen Additiven in mehreren Mischzonen zulässt und welcher die Rückvermischung eines Additivs in die vorhergehende Mischzone über die Mischschnecke entgegen der Transportrichtung auch über längere Zeit der Zugabe vermeidet. Dadurch erhielte man bei der auch bei einer längeren Zugabezeit eine verbesserte Produktqualität und kann die Möglichkeiten eines Mischers mit mehreren Mischzonen besser ausnutzen.

Die Erfindung löst diese Aufgabe durch einen Mischer mit mehreren Mischzonen, in dem die Mischzonen zwischen jeweils mindestens einem Einlass und mindestens einem Auslass in dem Mischergehäuse angeordnet sind, und wobei auf der Mischerwelle in mindestens einer Mischzone in Helixanordnung nichtdurchgängige Förderformteile angeordnet sind, die einen Transport und eine Durchmischung des Polymergranulates bewirken und zwischen mindestens zwei Mischzonen auf eine begrenzte Distanz auf der Mischwelle eine durchgängige Förderschnecke vorhanden ist, die einen Transport bewirkt und eine Rückvermischung des in der nachfolgenden Mischzone zugegebenen Additivs vermeidet.

Dieser Mischer bietet den Vorteil eines Mischers mit mehreren Mischzonen, durch den mehrere unterschiedliche Additive zugegeben werden können, ohne dass eine Vermischung der einzelnen Additive in dem Polymergranulat erfolgt, wobei gleichzeitig die unerwünschte Rückvermischung der Additive über die Mischwelle in die vorhergehende Mischzone vermieden wird. Dadurch wird insgesamt auch eine bessere Wirtschaftlichkeit des Herstellprozesses von thermoplastischen Massen mit Additiven erreicht. Durch die nichtdurchgängigen Förderelemente wird außerdem eine bessere Durchmischung im Vergleich zu den durchgängigen Förderschnecken erreicht.

Der hier beschriebene Mischer ist insbesondere zur Beaufschlagung von Polymergranulat in dem Mischer mit verschiedenen Additiven geeignet, kann jedoch prinzipiell zur Vermischung beliebiger Feststoffe mit beliebigen verschiedenen Additiven genutzt werden.

Beansprucht wird insbesondere eine Vorrichtung zum aufeinanderfolgenden Einbringen von Additiven in ein Polymergranulat, umfassend
- einen Mischer, welcher ein Gehäuse und mindestens eine Mischerwelle,
- mindestens eine Einlassöffnung für ein Polymergranulat,
- mindestens eine Einlassöffnung für ein erstes Additiv, welche sich in Transportrichtung abwärts von der Einlassöffnung für das Polymergranulat befindet,
- mindestens eine Auslassöffnung für das mit dem ersten Additiv gemischte Polymergranulat, welche in Transportrichtung abwärts von der Einlassöffnung für das Polymergranulat und von der Einlassöffnung für das erste Additiv angeordnet ist, so dass sich eine erste Mischzone bildet,
- mindestens eine zweite Einlassöffnung für ein zweites Additiv, welche sich in Transportrichtung abwärts von der Einlassöffnung für das Polymergranulat, der ersten Einlassöffnung für das erste Additiv und der Auslassöffnung für das mit dem ersten Additiv gemischte Polymergranulat befindet,
- mindestens eine zweite Auslassöffnung für das mit dem zweiten Additiv gemischte Polymergranulat, welche sich in Transportrichtung abwärts von der Einlassöffnung für das Polymergranulat, der ersten Einlassöffnung für das erste Additiv, der Auslassöffnung für das mit dem ersten Additiv gemischte Polymergranulat und der zweiten Einlassöffnung für das zweite Additiv befindet, so dass sich eine zweite Mischzone bildet,
- Antriebseinheiten zum Antrieb der mindestens einen Mischerwelle,
und welche dadurch gekennzeichnet ist, dass
- innerhalb der ersten Mischzone auf der Oberfläche der Mischerwelle in Helixanordnung Förderformteile befestigt sind, die einen Transport und eine Durchmischung des Polymergranulates bewirken, und
- zwischen der Auslassöffnung für das mit dem ersten Additiv gemischte Polymergranulat und der Einlassöffnung für das zweite Additiv zwischen den Mischzonen auf der Oberfläche der Mischerwelle ein Abschnitt mit einer durchgängigen Förderschnecke angeordnet ist, der für rückströmende Feststoffe aus der darauffolgenden Mischzone nicht durchlässig ist, und
- in der darauffolgenden Mischzone wiederum auf der Oberfläche der Mischerwelle in Helixanordnung nichtdurchgängige Förderformteile befestigt sind, die einen Transport und eine Durchmischung des Polymergranulates bewirken.

In einer Ausführungsform der Erfindung handelt es sich bei den Förderformteilen um in Richtung der Helixanordnung geradlinige Leitbleche. Dadurch wird eine besonders schonende Durchmischung des Polymergranulates mit den Additiven erreicht. In einer weiteren Ausführungsform der Erfindung handelt es sich bei den Förderformteilen um in Helixanordnung gebogene Schaufeln. Dadurch wird eine besonders gründliche Durchmischung des Polymergranulates mit den Additiven erreicht.

Die Förderformteile sind auf der Oberfläche der Mischerwelle bevorzugt mittig angeordnet. Dadurch lässt sich eine gute Durchmischung der Additive mit dem Polymergranulat erreichen.

In einer weiteren Ausführungsform der Erfindung schließen sich an die zweite Mischzone in gleicher Weise eine oder mehrere weitere Mischzonen an. In diesem Fall sind mehrere Einlässe und Auslässe vorhanden, und zwar mindestens jeweils soviele, wie Mischzonen vorhanden sind. Zwischen einem Einlass für ein Additiv und einem Auslass für das mit dem ersten Additiv vermischte Polymergranulat wird dann jeweils eine Mischzone gebildet.

Im Rahmen der Erfindung ist es möglich, dass innerhalb einer weiteren Mischzone auf der Oberfläche der Mischerwelle in Helixanordnung nichtdurchgängige Förderformteile befestigt sind, die einen Transport und eine Durchmischung des Polymergranulates bewirken, und zwischen mindestens zwei weiteren Mischzonen ein Abschnitt mit einer durchgängigen Förderschnecke angeordnet ist, der für rückströmende Feststoffe aus der darauffolgenden Mischzone nicht durchlässig ist. Dadurch lässt sich die erfindungsgemäße Vorrichtung vorteilhaft für die Zugabe mehrerer Additive ohne Rückvermischung nutzen.

In einer Ausführungsform der Erfindung umfasst der Mischer zwei oder mehrere Mischerwellen. Diese können gegeneinander gleichläufig oder gegenläufig sein. Diese können auch miteinander verzahnt sein. Durch die Verwendung zweier oder mehrerer Mischerwellen wird ein schnellerer Transport des Polymergranulates oder eine verbesserte Durchmischung des Polymergranulates mit den Additiven ermöglicht. Zwei oder mehrere Mischerwellen können insbesondere bei sehr zähem und schwierig durch eine Mischerschnecke zu transportierendem Polymergranulat von Vorteil sein, da dann eine höhere Kraft auf das Polymergranulat wirkt.

Werden zwei oder mehr Mischerwellen in dem Mischer der vorliegenden Erfindung genutzt, so können auch die weiteren Mischerwellen innerhalb mindestens einer Mischzone mit nichtdurchgängigen Förderformteilen ausgestattet sein, die einen Transport und eine Durchmischung des Polymergranulates bewirken, und zwischen den mindestens zwei Mischzonen ein Abschnitt mit einer durchgängigen Förderschnecke angeordnet sein, der für rückströmende Feststoffe aus der darauffolgenden Mischzone nicht durchlässig ist. Dadurch lassen sich auch bei zwei oder mehreren Mischerwellen die Vorteile der erfindungsgemäßen Vorrichtung nutzen.

Auch die Einlässe und die Auslässe können für eine Mischzone mehrfach vorhanden sein. In diesem Fall wird dann über jeden Einlass für eine Mischzone das gleiche Additiv in den Mischer eingelassen und über jeden Auslass das mit dem jeweiligen Additiv versehene Polymergranulat aus dem Mischer entnommen. Dies kann insbesondere bei mehreren eingesetzten Mischerwellen sinnvoll sein, um eine bessere Aufgabe des jeweiligen Additivs über den gesamten Mischer und eine schnellere Entnahme des mit dem jeweiligen Additiv vermischten Polymergranulates zu erreichen. Die Ein- und Auslässe können je nach Bedarf auch verschließbar sein.

In einer weiteren Ausführungsform der Erfindung ist wenigstens einer der Auslässe für das mit dem jeweiligen Additiv vermischte Polymer mit einem Absperrschieber verschließbar. Dadurch kann verhindert werden, dass bei einer ungeleichmäßigen Zugabe des Polymergranulates oder eines Additivs Material über den Auslass in den Mischer zurückgesogen und unerwünscht mittransportiert wird.

An dem Mischer der vorliegenden Erfindung können auch Einrichtungen zum Gasausgleich und zur Reinigung der abgelassenen Gase ausgeordnet sein, die einen Gasaustausch des Mischers mit der Umgebung ermöglichen. Dies können insbesondere Filter für Feinstäube sein.

Die Anordnung des oder der Filter kann dabei beliebig sein. So ist es im Rahmen der Erfindung möglich, dass der Mischer in Segmente unterteilt ist, und sich zwischen dem Einlass oder den Einlässen für eine Mischzone und dem Auslass oder den Auslässen für die Mischzone mittig ein Segment befindet, und der Filter für Feinstäube genau in diesem Segment mittig und auf dem Mischer angeordnet ist. Dadurch ist die Wirkungsweise des Filters für diese Mischzone optimal.

Der oben beschriebene Mischer kann weiterhin die üblichen Begleitaggregate und Begleiteinrichtungen enthalten, die zum Betrieb von Mischern erforderlich sind. Hierzu gehören beispielsweise Motoren als Antriebe, Ventile, Leitungen, Messsensoren, Trichter, Heizungen, Transportbänder oder Steuerungseinrichtungen.

Beansprucht wird auch die Verwendung des beschriebenen Mischers für die Vermischung von Polymergranulaten mit verschiedenen Additiven.

Beansprucht wird insbesondere die Verwendung des beschriebenen Mischers mit verschiedenen Mischzonen und mindestens einer Mischwelle, auf der auf der Oberfläche in Helixanordnung nichtdurchgängige Förderformteile befestigt sind, die einen Transport und eine Durchmischung des Polymergranulates bewirken, wobei zwischen mindestens zwei Mischzonen auf der Oberfläche der Mischerwelle keine nichtdurchgängigen Förderformteile, sondern stattdessen ein Abschnitt mit einer durchgängigen Förderschnecke angeordnet ist, der für rückströmende Feststoffe aus der darauffolgenden Mischzone nicht durchlässig ist, wobei dieser zum Mischen eines Polymergranulates mit zwei verschiedenen Additiven genutzt wird. Durch die Verwendung des Mischers lässt sich eine unerwünschte Rückvermischung der verschiedenen Additive in die jeweils vorhergehende Mischzone vermeiden, so dass die einzelnen Polymergranulate mit den verschiedenen Additiven nicht verunreinigt werden.

In einer Ausführungsform der Verwendung der Erfindung handelt es sich bei dem zweiten Additiv um Ruß. Die Verwendung des oben beschrieben Mischers ist bei der Verwendung von Ruß als zweitem Additiv sinnvoll, weil dadurch wie bei den Mischern mit mehreren Mischzonen eine Verunreinigung des frischen Polymergranulates mit dem Ruß vor Erreichen der Mischzone mit dem Ruß vermieden wird, indem eine Rückvermischung des Rußes in die vorherigen Mischzonen nicht stattfindet. Dadurch werden ungleichmäßig schwarz gefärbte Polymergranulate mit einer schlechteren Qualität vermieden.

Der oben beschriebene Mischer kann auch zum Mischen eines Polymergranulats mit drei oder mehreren verschiedenen Additiven genutzt werden. Dabei kann es sich bei einem einem der Additive um Ruß handeln, welches dann in der letzten Mischzone zugeführt wird. Die Ausführung erfolgt prinzipiell mit demselben Mischer, der zwei verschiedene Additive zumischt. Im Idealfall weist der verwendete Mischer für jedes zugemischte Additiv eine eigene Mischzone auf. Es ist jedoch im Rahmen der Erfindung auch möglich, zwei oder mehrere Additive in eine Mischzone zuzugeben.

Die Erfindung besitzt den Vorteil, einen Mischer mit mehreren Mischzonen zur Verfügung zu stellen, durch den sich in verschiedenen Mischzonen verschiedene Additive in ein Polymergranulat einmischen lassen und durch den eine unerwünschte Rückvermischung des in einer Mischzone zugegebenen Additivs in die vorhergehende Mischzone vermieden wird. Dadurch wird insgesamt eine höhere Produktqualität und eine bessere Wirtschaftlichkeit des Herstellprozesses für thermoplastische Massen erreicht. Bei der Verwendung von Ruß wird auch nach längerer Zugabezeit kein farbloses, mit Additiven vermischtes Polymergranulat mit Ruß verunreinigt.

Die Erfindung wird anhand von sieben Zeichnungen weiter dargestellt, wobei die Zeichnungen nur Ausführungsformen der Erfindung darstellen und diese die Erfindung in keiner Weise beschränken.

Zeichnung FIG.1 zeigt einen Mischer mit mehreren Mischzonen in seitlicher Ansicht. Zeichnung FIG.2 zeigt einen Mischer mit mehreren Mischzonen in frontaler Ansicht im Querschnitt. Zeichnung FIG.3 zeigt einen geöffneten Mischer mit mehreren Mischzonen in Ansicht von oben. Zeichnung FIG.4 zeigt einen geschlossenen Mischer mit mehreren Mischzonen in Ansicht von oben. Zeichnung FIG.5 zeigt einen geschlossenen Mischer mit mehreren Mischzonen in Ansicht schräg von oben. FIG.6 zeigt einen Mischer mit mehreren Mischzonen in seitlicher Ansicht mit zwei Filtern. FIG.7 zeigt den geschlossenen Mischer mit mehreren Mischzonen mit zwei Filtern in Ansicht schräg von oben.

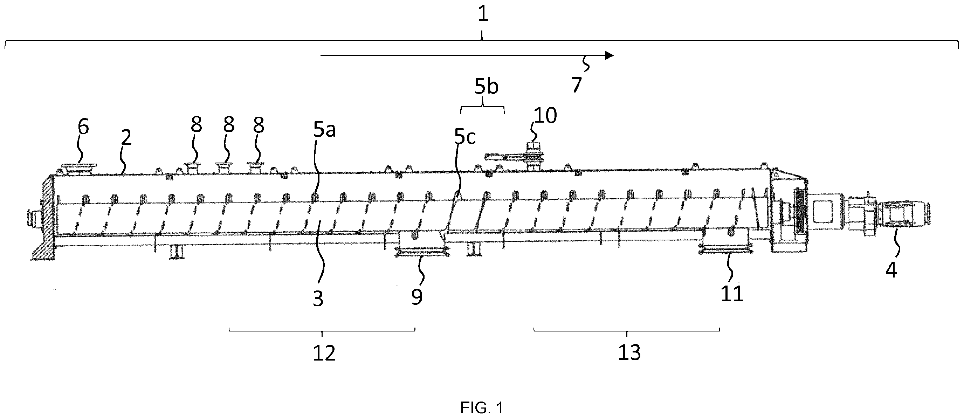

FIG.1 zeigt einen Mischer **(1),** der ein Gehäuse **(2)** aufweist, weiterhin eine Mischerwelle **(3),** die sich in das Innere des Gehäuses **(2)** erstreckt, und die mit einem Motor **(4)** als Antrieb für die Mischerwelle **(3)** angetrieben wird. Die Mischerwelle **(3)** enthält darauf befestigt in Helixanordnung nichtdurchgängige Förderformteile **(5a).** In dem Gehäuse **(2)** ist ein Einlass **(6)** für das Polymergranulat gezeigt, weiterhin in Transportrichtung **(7)** abwärts angeordnet drei Einlässe **(8)** für ein erstes Additiv, ein erster Auslass für Polymergranulat **(9),** welches mit dem ersten Additiv vermischt wurde, einen zweiten Einlass **(10)** für ein zweites Additiv und einen zweiten Auslass **(11)** für Polymergranulat, welches mit dem zweiten Additiv vermischt wurde. Dieses aus dem zweiten Auslass **(11)** entnommene Additiv enthält zusätzlich das erste Additiv. Durch die Einlässe **(8)** für das erste Additiv und den in Transportrichtung folgenden Auslass **(9)** für Polymergranulat, welches mit dem ersten Additiv vermischt wurde, wird die erste Mischzone **(12)** definiert. Durch den Einlass **(10)** für das zweite Additiv und den in Transportrichtung folgenden Auslass **(11)** für Polymergranulat, welches mit dem zweiten Additiv vermischt wurde, wird die zweite Mischzone **(13)** definiert. Zwischen dem ersten Auslass für Polymergranulat **(9),** welches mit dem ersten Additiv vermischt wurde und dem zweiten Einlass **(10)** für ein zweites Additiv befindet sich ein ein Abschnitt **(5b)** mit einer durchgängigen Förderschnecke **(5c).** Dieser ist für zurückfließendes zweites Additiv aus dem zweiten Einlass **(10)** nicht durchlässig. Dadurch kann es nicht zu einer Rückvermischung des zweiten Additivs aus der zweiten Mischzone **(13)** in die erste Mischzone **(12)** kommen.

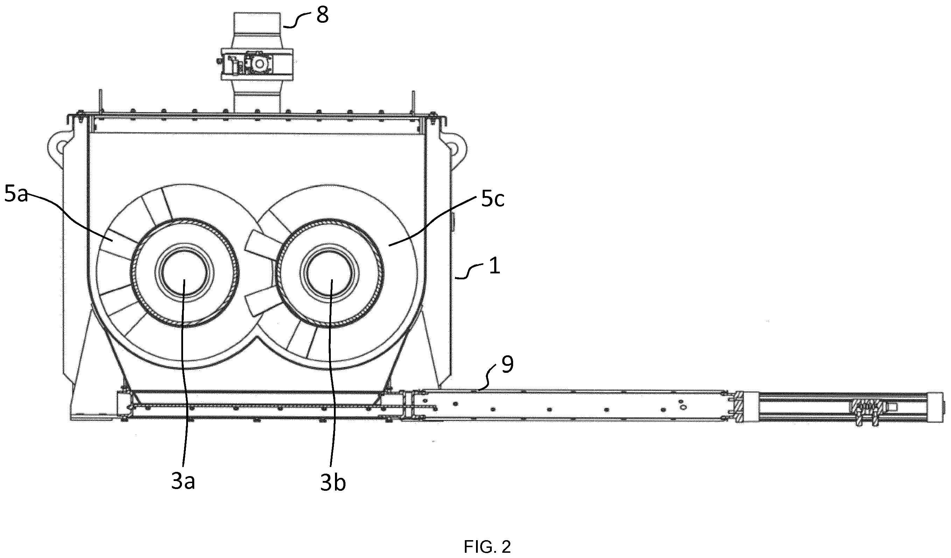

FIG.2 zeigt einen Mischer **(1)** mit mehreren Mischzonen **(12,13)** in frontaler Ansicht im Querschnitt. Gezeigt sind zwei Mischerwellen **(3a,3b),** ein Einlass **(8)** für ein Additiv und ein Auslass **(9)** für Polymergranulat mit dem Additiv. An der ersten Mischerwelle **(3a)** sind nichtdurchgängige Förderformteile **(5a)** befestigt. Diese transportieren und mischen das Polymergranulat mit dem jeweiligen Additiv. An der zweiten Mischerwelle **(3b)** ist der Abschnitt mit der durchgängigen Förderschnecke **(5c)** zu sehen.

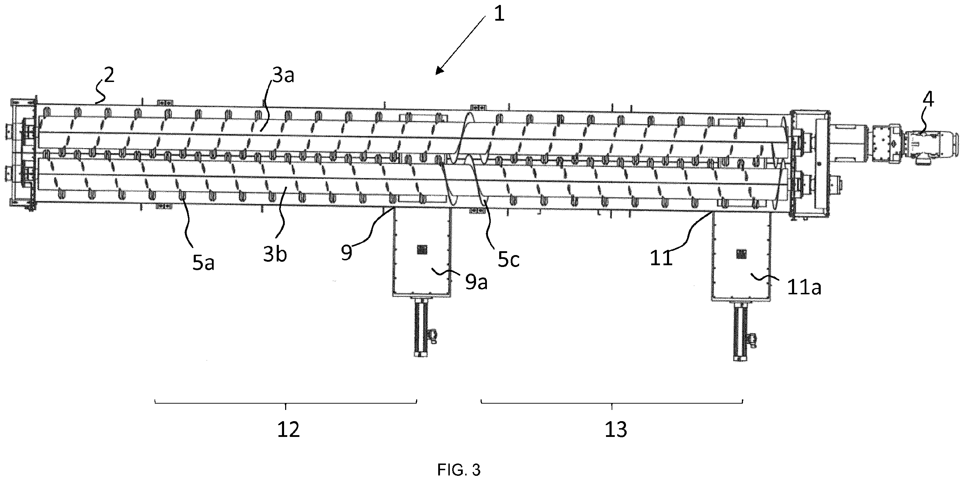

FIG.3 zeigt einen geöffneten Mischer **(1)** von oben, welcher mehrere Mischzonen **(12,13)** umfasst. Zu sehen sind zwei Mischerwellen **(3a,3b).** Auf den Mischerwellen **(3)** sind innerhalb der ersten Mischzone **(12)** und der zweiten Mischzone **(13)** nichtdurchgängige Förderformteile **(5a)** aufgebracht. Zwischen der ersten Mischzone **(12)** und der zweiten Mischzone **(13)** ist hingegen ein Abschnitt mit einer durchgängigen Förderschnecke **(5c)** angeordnet. Dadurch kann das Additiv, welches in die zweite Mischzone **(13)** zugegeben wird, nicht in die erste Mischzone **(12)** zurückvermischt werden. Die Mischerwellen **(3a,3b)** sind aufgrund des Helixdrehsinns der darauf Förderformteile **(5a)** und der Förderschnecke **(5c)** gegenläufig. Zu sehen ist auch der Motor **(4)** zum Antrieb der Mischerschnecken **(3a,3b)** und zwei Auslässe (**9**,**11**) für Polymergranulat mit dem Additiv, welche sich hinter jeweils einer Mischzone befinden. Die Auslässe **(9,11)** sind hier unterhalb des Gehäuses **(2)** des Mischers **(1)** angeordnet. Diese sind mit Absperrschiebern (**9a,11a**) verschließbar.

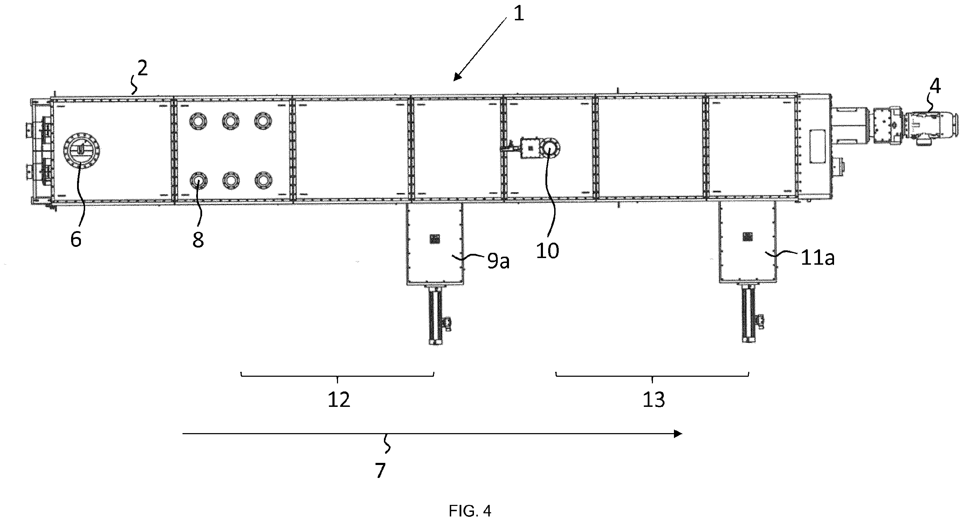

FIG.4 zeigt einen geschlossenen Mischer **(1)** von oben, welcher mehrere Mischzonen **(12,13)** enthält. Zu sehen sind das Gehäuse **(2)** und der Motor **(4)** zum Antrieb der Mischerschnecken **(3).** Weiterhin sieht man den Einlass **(6)** für das unvermischte Polymergranulat, insgesamt sechs Einlässe **(8)** für das erste Additiv und den Absperrschieber **(9a)** für einen ersten Auslass **(9)** für Polymergranulat, welches mit dem ersten Additiv vermischt wurde. In Transportrichtung **(7)** nachfolgend sieht man einen Einlass **(10)** für das zweite Additiv und den Absperrschieber (**11b**) für einen Auslass **(11)** für das Polymergranulat, welches mit dem zweiten Additiv vermischt wurde.

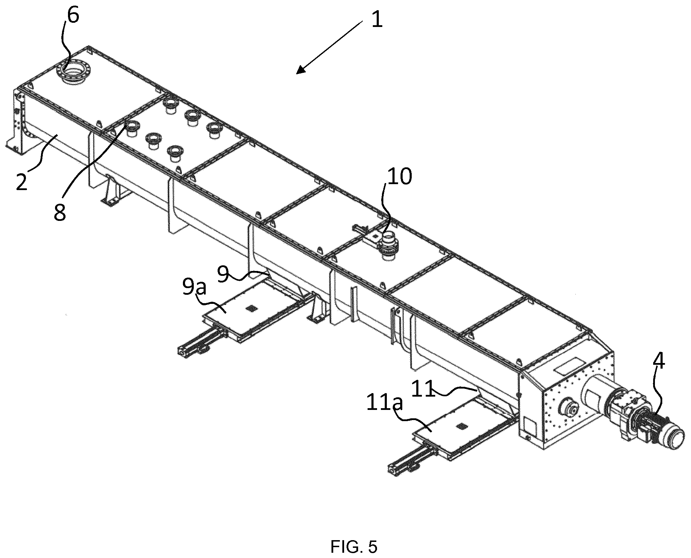

FIG.5 zeigt einen geschlossenen Mischer 74**(1)** in Ansicht schräg von oben mit einem Einlass **(6)** für Polymergranulat, weitere sechs in Transportrichtung nachfolgend angeordnete Einlassöffnungen **(8)** für das erste Additiv, einen ersten Auslass **(9)** für Polymergranulat, welches mit dem ersten Additiv vermischt wurde, mit einem Absperrschieber **(9a),** einen weiteren Einlass **(10)** für das zweite Additiv und einen zweiten Auslass **(11)** mit einem Absperrschieber **(11a)** für Polymergranulat, welches mit dem zweiten Additiv vermischt wurde.

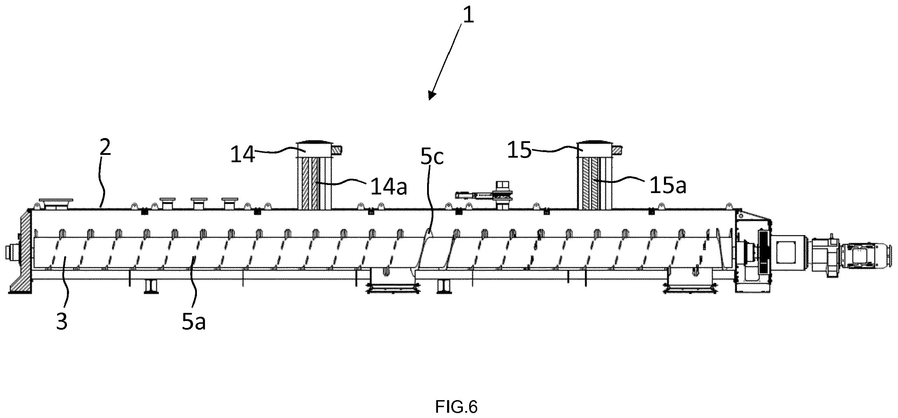

FIG.6 zeigt einen Mischer **(1),** welcher auf dem Gehäuse **(2)** mit zwei Filtern (**14,15**) zum Gasaustausch während des Transportes und der Mischung des Polymergranulates ausgestattet ist. Dadurch kann es während des Transportes und der Mischung des Polymergranulates nicht zu einem unerwünschten Druckaufbau im Mischer **(1)** kommen. Bezeichnet sind hier weiter nur das Gehäuse **(2),** die Mischwelle **(3),** die nichtdurchgängigen Förderformteile **(5a)** und der Abschnitt mit der durchgängigen Förderschnecke **(5c).** Die Filter **(14,15)** sind mit Filtereinsätzen **(14a,15a)** ausgestattet.

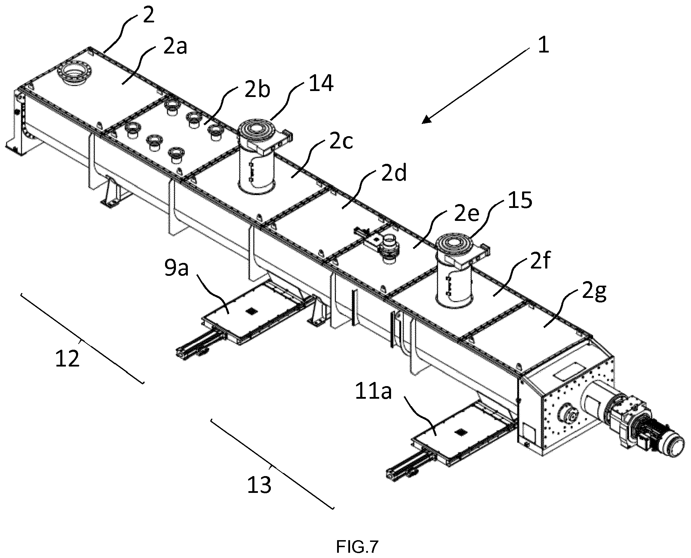

FIG.7 zeigt den Mischer **(1)** mit zwei Filtern **(14,15)** in Ansicht schräg von oben. Der Mischer (1) ist hier in geschlossener Ansicht gezeigt und durch das Gehäuse **(2)** in Segmente **(2a-2g)** unterteilt. Der erste Filter **(14)** ist innerhalb der ersten Mischzone **(12)** auf einem mittigen Segment **(2c)** in der Mitte aufgesetzt. Dieser ermöglicht dadurch in der ersten Mischzone **(12)** einen Gasaustausch. Der zweite Filter **(15)** ist innerhalb der zweiten Mischzone **(13)** auf einem mittigen Segment **(2f)** in der Mitte aufgesetzt. Dieser ermöglicht dadurch in der zweiten Mischzone **(13)** einen Gasaustausch. Bezeichnet sind hier außerdem die Absperrschieber **(9a,11a)** für die Auslässe **(9,11).**

**Bezugszeichenliste**

| | |
|---|---|
| 1 | Mischer |
| 2 | Gehäuse |
| 3 | Mischerwelle |
| 3a,3b | Zwei verschiedene Mischerwellen |
| 4 | Motor |
| 5a | Nichtdurchgängige Förderformteile in Helixanordnung |
| 5b | Abschnitt mit durchgängiger Förderschnecke |
| 5c | Durchgängige Förderschnecke in Helixanordnung |
| 6 | Einlass für Polymergranulat |
| 7 | Transportrichtung |
| 8 | Einlass für erstes Additiv |
| 9 | Erster Auslass für Polymergranulat mit erstem Additiv |
| 9a | Absperrschieber für den ersten Auslass |
| 10 | Einlass für zweites Additiv |
| 11 | Zweiter Auslass für Polymergranulat mit zweitem Additiv |
| 11a | Absperrschieber für den zweiten Auslass |
| 12 | Erste Mischzone |
| 13 | Zweite Mischzone |
| 14 | Erster Filter |
| 14a | Filtereinsatz für ersten Filter |
| 15 | Zweiter Filter |
| 15a | Filtereinsatz für zweiten Filter |

## Patentansprüche

1. Vorrichtung zum aufeinanderfolgenden Einbringen von Additiven in ein Polymergranulat, umfassend
• einen Mischer (1), welcher ein Gehäuse (2) und mindestens eine Mischerwelle (3),
• mindestens eine Einlassöffnung (6) für ein Polymergranulat,
• mindestens eine Einlassöffnung (8) für ein erstes Additiv, welche sich in Transportrichtung (7) abwärts von der Einlassöffnung (6) für das Polymergranulat befindet,
• mindestens eine Auslassöffnung (9) für das mit dem ersten Additiv gemischte Polymergranulat, welche in Transportrichtung (7) abwärts von der Einlassöffnung (6) für das Polymergranulat und von der Einlassöffnung (8) für das erste Additiv angeordnet ist, so dass sich eine erste Mischzone (12) bildet,
• mindestens eine zweite Einlassöffnung (10) für ein zweites Additiv, welche sich in Transportrichtung (7) abwärts von der Einlassöffnung (6) für das Polymergranulat, der ersten Einlassöffnung (8) für das erste Additiv und der Auslassöffnung (9) für das mit dem ersten Additiv gemischte Polymergranulat befindet,
• mindestens eine zweite Auslassöffnung (11) für das mit dem zweiten Additiv gemischte Polymergranulat, welche sich in Transportrichtung (7) abwärts von der Einlassöffnung (6) für das Polymergranulat, der ersten Einlassöffnung (8) für das erste Additiv, der Auslassöffnung (9) für das mit dem ersten Additiv gemischte Polymergranulat und der zweiten Einlassöffnung (10) für das zweite Additiv befindet, so dass sich eine zweite Mischzone (13) bildet,
• Antriebseinheiten (4) zum Antrieb der mindestens einen Mischerwelle (3),
**dadurch gekennzeichnet, dass**
• innerhalb der ersten Mischzone (12) auf der Oberfläche der Mischerwelle (3) in Helixanordnung nichtdurchgängige Förderformteile (5a) befestigt sind, die einen Transport und eine Durchmischung des Polymergranulates bewirken, und
• zwischen der Auslassöffnung (9) für das mit dem ersten Additiv gemischte Polymergranulat und der Einlassöffnung (10) für das zweite Additiv zwischen den Mischzonen (12,13) auf der Oberfläche der Mischerwelle (3) ein Abschnitt mit einer durchgängigen Förderschnecke (5c) angeordnet ist, der für rückströmende Feststoffe aus der darauffolgenden Mischzone (13) nicht durchlässig ist, und
• in der darauffolgenden Mischzone (13) wiederum auf der Oberfläche der Mischerwelle (3) in Helixanordnung nichtdurchgängige Förderformteile (5a) befestigt sind, die einen Transport und eine Durchmischung des Polymergranulates bewirken.

2. Vorrichtung nach Anspruch 1, **dadurch gekennzeichnet, dass** es sich bei den nichtdurchgängigen Förderformteilen (5a) um in Richtung der Helixanordnung geradlinige Leitbleche handelt.

3. Vorrichtung nach Anspruch 1, **dadurch gekennzeichnet, dass** es sich bei den nichtdurchgängigen Förderformteilen (5a) um in Helixanordnung gebogene Schaufeln handelt.

4. Vorrichtung nach einem der Ansprüche 1 bis 3, **dadurch gekennzeichnet, dass** die nichtdurchgängigen Förderformteile (5a) auf der Oberfläche der Mischerwelle (3) mittig angeordnet sind.

5. Vorrichtung nach einem der Ansprüche 1 bis 4, **dadurch gekennzeichnet, dass** sich an die zweite Mischzone (13) in gleicher Weise eine oder mehrere weitere Mischzonen anschließen.

6. Vorrichtung nach Anspruch 5, **dadurch gekennzeichnet, dass** mindestens innerhalb einer weiteren Mischzone auf der Oberfläche der Mischerwelle (3) in Helixanordnung nichtdurchgängige Förderformteile (5a) befestigt sind, die einen Transport und eine Durchmischung des Polymergranulates bewirken, und zwischen mindestens zwei weiteren Mischzonen ein Abschnitt mit einer durchgängigen Förderschnecke (5c) angeordnet ist, der für rückströmende Feststoffe aus der darauffolgenden Mischzone nicht durchlässig ist.

7. Vorrichtung nach einem der Ansprüche 1 bis 6, **dadurch gekennzeichnet, dass** der Mischer (1) zwei (3a,3b) oder mehrere Mischerwellen (3) umfasst.

8. Vorrichtung nach Anspruch 7, **dadurch gekennzeichnet, dass** auch die zweite (3b) oder die weiteren Mischerwellen innerhalb mindestens einer Mischzone mit nichtdurchgängigen Förderformteilen (5a) ausgestattet sind, die einen Transport und eine Durchmischung des Polymergranulates bewirken, und zwischen mindestens zwei Mischzonen ein Abschnitt mit einer durchgängigen Förderschnecke (5c) angeordnet ist, der für rückströmende Feststoffe aus der darauffolgenden Mischzone nicht durchlässig ist.

9. Vorrichtung nach einem der Ansprüche 1 bis 8, **dadurch gekennzeichnet, dass** wenigstens einer der Auslässe (9,11) mit einem Absperrschieber (9a,11a) verschließbar ist.

10. Vorrichtung nach einem der Ansprüche 1 bis 9, **dadurch gekennzeichnet, dass** innerhalb mindestens einer Mischzone (12) ein Filter (14) für Feinstäube angeordnet ist, der einen Gasaustausch des Mischers (1) mit der Umgebung ermöglicht.

11. Vorrichtung nach Anspruch 10, **dadurch gekennzeichnet, dass** der Mischer (1) in Segmente (2a-2g) unterteilt ist, und sich zwischen dem Einlass (8) oder den Einlässen für eine Mischzone (12) und dem Auslass (9) oder den Auslässen mittig ein Segment (2c) befindet, und der Filter (14) für Feinstäube genau in diesem Segment (2c) mittig und auf dem Mischer (1) angeordnet ist.

12. Verwendung einer Vorrichtung zum aufeinanderfolgenden Einbringen von Additiven in ein Polymergranulat nach einem der Patentansprüche 1 bis 11, **dadurch gekennzeichnet, dass** diese zum Mischen eines Polymergranulates mit zwei verschiedenen Additiven genutzt wird.

13. Verwendung einer Vorrichtung zum aufeinanderfolgenden Einbringen von Additiven in ein Polymergranulat nach Patentanspruch 12, **dadurch gekennzeichnet, dass** es sich bei dem zweiten Additiv um Ruß handelt.

14. Verwendung einer Vorrichtung zum aufeinanderfolgenden Einbringen von Additiven in ein Polymergranulat nach einem der Patentansprüche 1 bis 11, **dadurch gekennzeichnet, dass** diese zum Mischen eines Polymergranulats mit drei oder mehreren verschiedenen Additiven genutzt wird.

15. Verwendung einer Vorrichtung zum aufeinanderfolgenden Einbringen von Additiven in ein Polymergranulat nach Patentanspruch 14, **dadurch gekennzeichnet, dass** es sich bei einem der Additive um Ruß handelt.

## Claims

1. Apparatus for sequentially introducing additives into a polymer granulate, comprising
• a mixer (1), which comprises a housing (2) and at least one mixer shaft (3),
• at least one inlet opening (6) for a polymer granulate,
• at least one inlet opening (8) for a first additive which is located in the transport direction (7) downwards from the inlet opening (6) for the polymer granulate,
• at least one outlet opening (9) for the polymer granulate mixed with the first additive, which is arranged in the transport direction (7) downwards from the inlet opening (6) for the polymer granulate and from the inlet opening (8) for the first additive, so that a first mixing zone (12) is formed,
• at least one second inlet opening (10) for a second additive which is located in the transport direction (7) downwards from the inlet opening (6) for the polymer granulate, the first inlet opening (8) for the first additive and the outlet opening (9) for the polymer granulate mixed with the first additive,
• at least one second outlet opening (11) for the polymer granulate mixed with the second additive, which is located in the transport direction (7) downwards from the inlet opening (6) for the polymer granulate, the first inlet opening (8) for the first additive, the outlet opening (9) for the polymer granulate mixed with the first additive and the second inlet opening (10) for the second additive, so that a second mixing zone (13) is formed,
• Drive units (4) for driving at least one mixer shaft (3),
**characterised in that**
• within the first mixing zone (12), on the surface of the mixer shaft (3), non-passable conveying mouldings (5a) are fixed in helical arrangement on the surface of the mixer shaft (3), said conveying mouldings effecting transport and mixing of the polymer granulates, and
• between the outlet opening (9) for the polymer granulate mixed with the first additive and the inlet opening (10) for the second additive, between the mixing zones (12, 13) on the surface of the mixer shaft (3), there is arranged a section with a continuous conveying screw (5c) which is not permeable to solids flowing back from the subsequent mixing zone (13), and
• in the subsequent mixing zone (13), non-continuous conveyor mouldings (5a) which effect transport and mixing of the polymer granulate are in turn fastened in helical arrangement to the surface of the mixer shaft (3).

2. Device according to Claim 1, **characterised in that** the non-continuous conveyor shaped parts (5a) are straight guide plates in the direction of the helical arrangement.

3. Device according to Claim 1, **characterised in that** the non-continuous shaped conveyor parts (5a) are blades bent in helical arrangement.

4. Device according to one of claims 1 to 3, **characterised in that** the non-continuous conveyor mouldings (5a) are arranged centrally on the surface of the mixer shaft (3).

5. Device according to one of claims 1 to 4, **characterised in that** the second mixing zone (13) is followed in the same manner by one or more further mixing zones.

6. Device (4) according to Claim 5, **characterised in that** at least within a further mixing zone on the surface of the mixer shaft (3) in helical arrangement non-continuous conveyor mouldings (5a) are fastened, which effect transport and mixing of the polymer granulate, and between at least two further mixing zones there is arranged a section with a continuous conveyor screw (5c), which is not permeable solids flowing back from the subsequent mixing zone.

7. A device according to any of claims 1 to 6, **characterized in that** the mixer (1) comprises two (3a,3b) or more mixer shafts (3).

8. Device according to Claim 7, **characterised in that** the second (3b) or the further mixer shafts are also equipped, within at least one mixing zone, with non-continuous conveyor mouldings (5a) which effect transport and mixing of the polymer granulate, and a section with a continuous conveyor screw (5c) is arranged between at least two mixing zones, which section is not permeable to solids flowing back from the subsequent mixing zone.

9. Device according to one of claims 1 to 8, **characterised in that** at least one of the outlets (9, 11) can be closed with a shut-off slide (9a, 11a).

10. Device according to one of claims 1 to 9, **characterised in that a filter** (14) for fine dusts is arranged within at least one mixing zone (12), which filter enables a gas exchange of the mixer (1) with the environment.

11. A device according to claim 10, **characterised in that** the mixer (1) is divided into segments (2a-2g), and a segment (2c) is centrally located between the inlet (8) or the inlets for a mixing zone (12) and the outlet (9) or the outlets, and the filter (14) for fine dusts is precisely centred in this segment (2c) and arranged on the mixer (1).

12. Use of a device for successively introducing additives into a polymer granulate according to one of the claims 1 to 11, **characterised in that** this device is used for mixing a polymer granulate with two different additives.

13. Use of a device for successively introducing additives into a polymer granulate according to patent claim 12, **characterised in that** the second additive is soot.

14. Use of a device for successively introducing additives into a polymer granulate according to one of the patent claims 1 to 11, **characterised in that** this device is used for mixing a polymer granulate with three or more different additives.

15. Use of a device for successively introducing additives into a polymer granulate according to patent claim 14, **characterised in that** one of the additives is soot.

## Revendications

1. Dispositif pour l'introduction successive d'additifs dans un granulé de polymère, comprenant
• un mélangeur (1) comprenant un boîtier (2) et au moins un arbre de mélange (3),
• au moins une ouverture d'entrée (6) pour un granulé de polymère,
• au moins une ouverture d'entrée (8) pour un premier additif, qui est située dans la direction de transport (7) vers le bas à partir de l'ouverture d'entrée (6) pour le granulé de polymère,
• au moins une ouverture de sortie (9) pour le granulé de polymère mélangé au premier additif, qui est disposée dans la direction de transport (7) vers le bas à partir de l'ouverture d'entrée (6) pour le granulé de polymère et de l'ouverture d'entrée (8) pour le premier additif, de sorte qu'une première zone de mélange (12) est formée,
• au moins une deuxième ouverture d'entrée (10) pour un deuxième additif, qui est située dans la direction de transport (7) vers le bas à partir de l'ouverture d'entrée (6) pour le granulé de polymère, la première ouverture d'entrée (8) pour le premier additif et l'ouverture de sortie (9) pour le granulé de polymère mélangé avec le premier additif,
• au moins une deuxième ouverture de sortie (11) pour le granulé de polymère mélangé au deuxième additif, qui est située dans la direction de transport (7) vers le bas à partir de l'ouverture d'entrée (6) pour le granulé de polymère, la première ouverture d'entrée (8) pour le premier additif, l'ouverture de sortie (9) pour le granulé de polymère mélangé au premier additif et la deuxième ouverture d'entrée (10) pour le deuxième additif, de sorte qu'une deuxième zone de mélange (13) est formée,
• des unités d'entraînement (4) pour l'entraînement d'au moins un arbre mélangeur (3),
**caractérisé en cela que**
• dans la première zone de mélange (12), sur la surface de l'arbre du mélangeur (3), des parties non continues de la forme de transport (5a) sont fixées dans une disposition hélicoïdale, qui provoquent le transport et le mélange des granulés de polymère, et
• entre l'ouverture de sortie (9) pour le granulé de polymère mélangé au premier additif et l'ouverture d'entrée (10) pour le deuxième additif entre-les zones de mélange (12, 13) une section avec un convoyeur à vis sans fin (5c) est disposée sur la surface de l'arbre du mélangeur (3), cette section n'est pas perméable aux solides qui reviennent de la zone de mélange suivante (13), et
• dans la zone de mélange suivante (13), à son tour, sur la surface de l'arbre du mélangeur (3), des pièces moulées de transport non continu (5a) sont fixées dans une disposition hélicoïdale, qui provoquent le transport et le mélange du granulat de polymère.

2. Dispositif selon la revendication 1, **caractérisé en ce que** les pièces moulées de transport non continu (5a) sont des tôles déflectrices rectilignes dans la direction de la disposition hélicoïdale.

3. Dispositif selon la revendication 1, **caractérisé en ce que** les pièces moulées de transport non continu (5a) sont des pales pliées dans une disposition hélicoïdale.

4. Dispositif selon l'une des revendications 1 à 3, **caractérisé en ce que** les pièces moulées de transport non continu (5a) sont disposées de manière centrale sur la surface de l'arbre de mélange (3).

5. Dispositif selon l'une des revendications 1 à 4, **caractérisé en ce qu'**une ou plusieurs autres zones de mélange sont adjacentes à la deuxième zone de mélange (13) de la même manière.

6. Dispositif selon la revendication 5, **caractérisé en ce qu'**au moins dans une autre zone de mélange sur la surface de l'arbre de mélange (3), des pièces moulées de transport non continu (5a) non perméables sont fixées en disposition hélicoïdale, qui effectuent un transport et un mélange minutieux du granulat de polymère, et entre au moins deux autres zones de mélange, une section avec une vis transporteuse continue (5c) est disposée, qui n'est pas perméable aux solides qui reviennent de la zone de mélange suivante.

7. Dispositif selon l'une quelconque des revendications 1 à 6, **caractérisé en ce que** le mélangeur (1) comprend deux (3a, 3b) ou plusieurs arbres de mélange (3).

8. Dispositif selon la revendication 7, **caractérisé en ce que** le deuxième (3b) ou les autres arbres de mélange dans au moins une zone de mélange sont également pièces moulées de transport non continu (5a) qui assurent un transport et un mélange homogène du granulat de polymère, et **en ce qu'**entre au moins deux zones de mélange est disposée section avec une vis de transport continue (5c), qui n'est pas perméable aux matières solides refluant de la zone de mélange suivante.

9. Dispositif selon l'une quelconque des revendications 1 à 8, **caractérisé en ce qu'**au moins l'une des sorties (9, 11) est munie d'une vanne d'arrêt (9a, 11a) pour la verrouiller.

10. Dispositif selon l'une quelconque des revendications 1 à 9, **caractérisé en ce qu'**un filtre (14) pour les poussières fines est disposé à l'intérieur d'au moins une zone de mélange (12), lequel filtre permet un échange gazeux du mélangeur (1) avec l'environnement.

11. Dispositif selon la revendication 10 **caractérisé en ce que** le mélangeur (1) est est divisé en segments (2a-2g), et un segment (2c) est situé au centre entre l'entrée (8) ou les entrées pour une zone de mélange (12) et la sortie (9) ou les sorties, et le filtre (14) pour les poussières fines est situé au centre précisément dans ce segment (2c) et sur le mélangeur (1).

12. Utilisation d'un dispositif pour l'introduction successive d'additifs
dans un granulé de polymère selon l'une des revendications 1 à 11, **caractérisée en ce qu'**il est utilisé pour mélanger un granulé de polymère avec deux additifs différents.

13. Utilisation d'un dispositif pour l'introduction successive d'additifs
dans un granulé de polymère selon la revendication 12, **caractérisée en ce que** que le deuxième additif est le noir de carbone.

14. Utilisation d'un dispositif pour l'introduction successive d'additifs dans un granulé de polymère selon l'une des revendications 1 à 11,
**caractérisée en ce qu'**il est utilisé pour mélanger un granulé de polymère avec trois ou plusieurs additifs différents.

15. Utilisation d'un dispositif pour introduire successivement des additifs dans un granulé de polymère selon la revendication 14, **caractérisée en ce que** l'un des additifs est du noir de carbone.
